Europäisches Patentamt

European Patent Office

Office européen des brevets

(19)

(11) Veröffentlichungsnummer: **0 100 784 B1**

# (12) EUROPÄISCHE PATENTSCHRIFT

(45) Veröffentlichungstag der Patentschrift:
**20.11.86**

(21) Anmeldenummer: **82107371.5**

(22) Anmeldetag: **13.08.82**

(51) Int. Cl.⁴: **F 16 K 17/06, F 16 K 17/04**

(54) **Druckbegrenzungsventil mit elektrisch einstellbarem Ansprechwert.**

(43) Veröffentlichungstag der Anmeldung:
**22.02.84 Patentblatt 84/8**

(45) Bekanntmachung des Hinweises auf die Patenterteilung:
**20.11.86 Patentblatt 86/47**

(84) Benannte Vertragsstaaten:
**DE FR GB IT SE**

(56) Entgegenhaltungen:
**CH - A - 314 989
DE - A - 2 527 685
FR - A - 2 255 528
GB - A - 1 286 691
US - A - 2 890 715
US - A - 2 917 072**

(73) Patentinhaber: **Vickers Systems GmbH,
Frölingstrasse 41, D-6380 Bad Homburg (DE)**

(72) Erfinder: **Schulz, René, Dr. Dipl.-Ing., Im Spiess 8,
D-6392 Neu-Anspach (DE)**

(74) Vertreter: **Blumbach Weser Bergen Kramer Zwirner
Hoffmann Patentanwälte, Sonnenbergerstrasse 43,
D-6200 Wiesbaden 1 (DE)**

## Beschreibung

Bei einem bekannten Druckbegrenzungsventil mit den Merkmalen a) bis g) (Herion Hydraulik-Katalog A 300 4.75, S. 23 und 28) ist ein Elektromotor zur Verstellung des Federsitzes vorgesehen. Ein derartiger Antrieb ist relativ teuer und platzaufwendig.

Es ist auch bekannt (FR-A-2 255 528), das Ventilelement hydraulisch zu stützen und die Stützkraft elektrohydraulisch zu erzeugen und einzustellen, indem ein Ablaufstrom von einem Ventil gesteuert wird. Bei dieser Steuerung werden die Merkmale b) bis h) verwendet, wobei jedoch die elektrisch ansteuerbare Ventileinrichtung von einer Pilotpumpe gespeist wird. Diese Lösung ist teuer und bedingt einen ständigen Leistungsverlust wegen des Ablaufstromes und des Pilotstromes.

Es ist ferner ein Druckbegrenzungsventil bekannt (US-A-2 917 072), das einen Innenkonus am Ventilelement aufweist, welches durch eine Ventilfeder auf einen rohrförmigen, verschiebbaren Sitz gepresst wird, der im Sinne eines Stufenkolbens eine grössere Kolbenfläche, eine kleinere Kolbenfläche und eine Differenzfläche aufweist. Im Gegensatz zur Erfindung ist die grössere Kolbenfläche vom zu überwachenden hydraulischen Druck beaufschlagt, und der Federsitz wird durch eine Schraube gebildet, ist also nicht laufend einstellbar.

Mit der Erfindung soll die Aufgabe gelöst werden, ein Druckbegrenzungsventil zu schaffen, dessen Ansprechwert elektrohydraulisch verstellbar ist, und zwar auch dann, wenn der gerade herrschende Systemdruck niedrig ist.

Die gestellte Aufgabe wird aufgrund der Massnahmen des Anspruchs 1 oder 5 gelöst.

Mit dem Druckbegrenzungsventil lässt sich somit ein wählbarer Arbeitsdruck einstellen, ohne dass eine Fremdenergiequelle benötigt wird. Die Einstellung des Ansprechwertes kann bei hohem oder niedrigem Arbeitsdruck erfolgen, wobei im letzteren Fall die Wirkeinstellung des Ventils sich erst bei den höheren Systemdrücken einstellt, d.h. die Ventilfeder richtig vorgespannt wird.

Für viele Anwendungen ist es dabei vorteilhaft, dass das Druckbegrenzungsventil auch als hydraulische Kapazität wirkt, und zwar nahezu in allen Druckbereichen. Bei der Zunahme des Systemdrucks nimmt nämlich der Abstand zwischen der Auslassöffnung des Druckbegrenzungsventils und dem Federsitz ab, wobei eine hydraulische Kammer mit der Druckflüssigkeit gefüllt wird und die Ventilfeder auf ihren richtigen Ansprechwert gespannt wird. Solange der Systemdruck niedrig ist, ist die Ventilfeder demnach mehr oder weniger stark entlastet.

Zwei Ausführungsbeispiele der Erfindung werden anhand der Zeichnung beschrieben. Dabei zeigt:

Fig. 1 die erste Ausführungsform und
Fig. 2 eine Einzelheit der zweiten Ausführungsform.

An einen hydraulischen Arbeitskreis 1 ist ein Druckbegrenzungsventil 2 angeschlossen, welches ein Gehäuse 3 mit einer Zulauföffnung 4, einer Ablauföffnung 5 und einem Innenraum 6 besitzt. In diesem ist ein Stufenkolben 7 mit einer grossen Kolbenfläche 7a, einer kleinen Kolbenfläche 7b und einer Differenzfläche 7c bis zur Anlage an einem Anschlag 13 geführt. Der Stufenkolben 7 weist eine Stufenbohrung 8 in seiner Längsachse auf, die mit der Zulauföffnung 4 verbunden ist, und zwar über einen abgedichteten Führungskörper 9, der als Teil des Gehäuses 3 angesehen werden kann und das dünnere Teil des Stufenkolbens 7 führt. Der Führungskörper 9 dient auch als Sitz einer Feder 10, die am Stufenkolben 7 anliegt, der noch eine Bohrung 11 zur Verbindung der grossen Kolbenfläche 7a mit der Differenzfläche 7c aufweist. Die Stufenbohrung 8 endet an einer Auslassöffnung 12, die einen Querschnitt $A_1$ besitzt und als Sitz eines Kegelventilkörpers 14 ausgebildet ist. Eine Ventilfeder 15 stützt sich auf einem Federsitz 16 ab und presst normalerweise den Ventilkegel 14 auf den Sitz, so dass die Auslassöffnung 12 normalerweise geschlossen ist. Die kleinere Kolbenfläche 7b des Stufenkolbens 7 hat einen Wert $A_2$, der grössenordnungsmässig der Querschnittsfläche $A_1$ entspricht. Die Kraft der Feder 10 ist gering im Verhältnis zur Kraft der Feder 15.

Der Federsitz 16 ist als Kolben mit einer Querschnittsfläche $A_3$ gestaltet und in einer Kammer 17 des Gehäuses geführt, die eine Druckzuführöffnung 18 aufweist. Ein Wegaufnehmer 20 weist einen Taster 21 auf, der die Lage des Kolbens 16 abtastet, woraus ein elektrisches Wegsignal $U_{ist}$ gebildet wird, welches einem Vergleicher 25 zugeführt wird. Dem Vergleicher 25 wird ferner ein elektrisches Sollwertsignal $U_{soll}$ zugeführt, und aus dem Vergleich wird ein Stellsignal $U_{stell}$ gebildet, das dem Magneten 26 eines Dreiwegeventils 27 zugeführt wird, dessen hydraulische Anschlüsse mit der Arbeitsleitung 1 bzw. mit der Öffnung 18 bzw. mit einer Tankleitung 30 verbunden sind. Das Dreiwegeventil 27 wirkt als hydraulischer Proportionalverstärker des elektrischen Stellsignals $U_{stell}$. Die Bauteile 16, 20, 25, 27 bilden einen Regelkreis, der die richtige Position des Federsitzes 16 entsprechend dem Sollsignal $U_{soll}$ einregelt.

Die Wirkungsweise der Schaltung ist wie folgt: Es sei zunächst ein niedriger Systemdruck in der Leitung 1 angenommen; ferner sei der Federsitz 16 gegenüber der Soll-Lage verstellt. Dies wird aufgrund des Tasters 21 festgestellt, es wird ein Stellsignal $U_{stell}$ gebildet, welches je nach Vorzeichen das Dreiwegeventil 27 so schaltet, dass Systemdruck in die Kammer 17 zugeführt oder diese – wie in der Zeichnung dargestellt – mit der Tankleitung 30 verbunden wird. Die Kolbenfläche $A_3$ des Federsitzes 16 ist wesentlich grösser als die Fläche $A_2$ des Stufenkolbens 7, so dass der Federsitz 16 eingestellt wird, ohne von den Vorgängen rechts von der Ventilfeder 15 beeinträchtigt zu werden. Wenn der Systemdruck ansteigt, wird der Stufenkolben 7 in der Anlage auf den Anschlag 13 verschoben, wodurch die Ventilfeder 15 auf ihren richtigen Vorspannungswert gebracht wird. Wenn der durch die Querschnittsfläche $A_1$ und die Kraft der Ventilfeder 15 zu erreichende Druck überschritten wird, öffnet der Ventilkegel 14 und lässt Druckflüssigkeit über den Weg 4, 8, 12, 5 zum Tank abströmen. Dabei befindet sich der Stufenkolben 7 am Anschlag 13.

Die Einstellung des Federsitzes 16 kann natürlich auch dann vorgenommen werden, wenn der Systemdruck hoch ist, weil eben die Querschnittsfläche $A_3$ wesentlich grösser als die Querschnittsfläche $A_2$ ist.

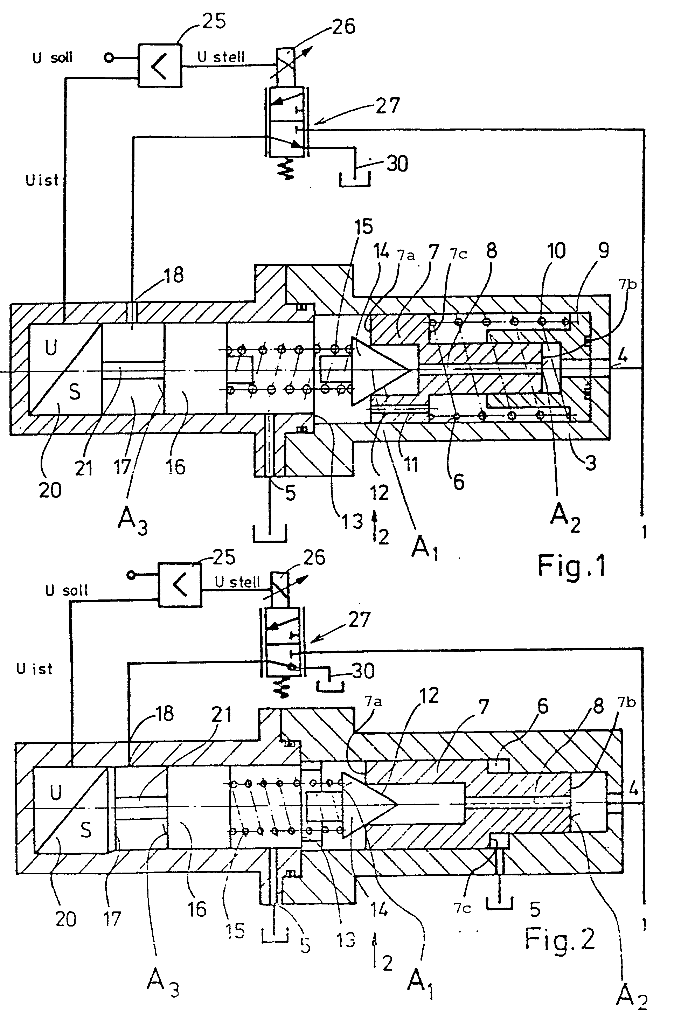

In der Ausführungsform nach Fig. 2 ist die Kolbenfläche $A_2$ grösser als die Querschnittsfläche $A_1$, so dass man keine Feder 10 benötigt, um den Stufenkolben 7 kurz vor Erreichen des eingestellten Ansprechwertes des Druckbegrenzungsventils an den Anschlag 13 zu fahren.

Während in den dargestellten Ausführungsbeispielen die Auslassöffnung 12 an einem beweglichen Teil angeordnet ist, ist es auch möglich, den Positioniermechanismus für den Federsitz, bestehend aus dem Wegaufnehmer 20, der Kammer 17 und dem Kolben 16, relativ zum Gehäuse 3 verschiebbar anzuordnen und bei steigendem Systemdruck in die richtige Position zu fahren. Auch damit ist es möglich, die Spannung der Feder 15 erst dann auf den richtigen Wert zu erhöhen, wenn der Ansprechwert des Druckbegrenzungsventils nahezu erreicht ist. Wesentlich ist, dass entweder der Positioniermechanismus für den Federsitz oder die Auslassöffnung 12 bei Erreichen des eingestellten Grenzdrucks gegen einen Anschlag fährt und dann die richtige Zusammenpressung der Feder 15 erreicht ist. In den dargestellten Ausführungsbeispielen ist dies der Anschlag 13.

**Patentansprüche**

1. Druckbegrenzungsventil, dessen Ansprechwert elektrisch einstellbar ist, mit folgenden Merkmalen:

a) der zu begrenzende Druck (Systemdruck) ist im Ventilgehäuse (3) an eine Auslassöffnung (12) geführt, die unterhalb des Ansprechwertes

b) von einem Ventilelement (14) verschlossen wird, das

c) durch die Kraft einer Ventilfeder (15) auf die Auslassöffnung (12) als Ventilsitz gedrängt wird, wobei sich die Ventilfeder (15)

d) auf einen laufend verstellbaren Federsitz (16) abstützt,

e) dessen Position durch einen Wegaufnehmer (20) feststellbar ist, der darüber ein elektrisches Wegsignal ($U_{ist}$) abgibt;

f) ein Vergleicher (25) vergleicht das elektrische Wegsignal ($U_{ist}$) mit einem wählbaren Sollwert ($U_{soll}$) und gibt ein Stellsignal ($U_{stell}$) ab, welches

g) nach Verstärkung auf die Lage des Federsitzes (16) im Sinne eines Regelkreises einwirkt; gekennzeichnet durch folgende Massnahmen:

h) eine vom Systemdruck gespeiste, elektrisch ansteuerbare Ventileinrichtung (27) dient zur Verstärkung und Wandlung des Stellsignals in eine hydraulische Kraft zur Einstellung des Federsitzes (16);

i) die Auslassöffnung (12) ist in einem Stufenkolben (7) untergebracht, dessen kleinere Kolbenfläche (7b) vom zu überwachenden hydraulischen Druck beaufschlagt ist, während die grössere Kolbenfläche (7a) die Auslassöffnung (12) aufnimmt und ausserhalb dieser, wie auch die Differenzfläche (7c), auf niedrigem Druck liegt;

j) der Stufenkolben (7) ist bei steigendem Druck auf einen Anschlag (13) verschiebbar.

2. Druckbegrenzungsventil nach Anspruch 1, dadurch gekennzeichnet, dass die kleinere Kolbenfläche (7b) etwas grösser als der Querschnitt ($A_1$) der Auslassöffnung (12) ist.

3. Druckbegrenzungsventil nach Anspruch 1, dadurch gekennzeichnet, dass die kleinere Kolbenfläche (7b) etwa gleich gross oder etwas kleiner als die Querschnittsfläche ($A_1$) der Auslassöffnung (12) ist und eine weitere Feder (10) am Stufenkolben (7) entgegen der Verschiebewirkung der Ventilfeder (15) angreift.

4. Druckbegrenzungsventil nach einem der Ansprüche 1 bis 3, dadurch gekennzeichnet, dass die elektrisch ansteuerbare Ventileinrichtung von einem Dreiwegeventil (27) gebildet wird, das vom zu überwachenden Druck gespeist wird.

5. Druckbegrenzungsventil, dessen Ansprechwert elektrisch einstellbar ist, mit folgenden Merkmalen:

a) der zu begrenzende Druck (Systemdruck) ist im Ventilgehäuse (3) an eine Auslassöffnung (12) geführt, die unterhalb des Ansprechwertes

b) von einem Ventilelement (14) verschlossen wird, das

c) durch die Kraft einer Ventilfeder (15) auf die Auslassöffnung (12) als Ventilsitz gedrängt wird, wobei sich die Ventilfeder (15)

d) auf einen laufend verstellbaren Federsitz (16) abstützt,

e) dessen Position durch einen Wegaufnehmer (20) feststellbar ist, der darüber ein elektrisches Wegsignal ($U_{ist}$) abgibt;

f) ein Vergleicher (25) vergleicht das elektrische Wegsignal ($U_{ist}$) mit einem wählbaren Sollwert ($U_{soll}$) und gibt ein Stellsignal ($U_{stell}$) ab, welches

g) nach Verstärkung auf die Lage des Federsitzes (16) im Sinne eines Regelkreises einwirkt; gekennzeichnet durch folgende Massnahmen:

h) eine vom Systemdruck gespeiste, elektrisch ansteuerbare Ventileinrichtung (27) dient zur Verstärkung und Wandlung des Stellsignals in eine hydraulische Kraft zur Einstellung des Federsitzes (16),

k) der Federsitz mit seiner hydraulischen Verstelleinrichtung und dem Wegaufnehmer ist in einem Geräteteil angeordnet, welches relativ zum Ventilgehäuse und zur Auslassöffnung hydraulisch verschiebbar und gegen einen Anschlag fahrbar ist.

## Claims

1. Pressure-limiting valve with electrical adjustment of the response setting, and with the following features:

a) in the valve housing (3), the pressure which is to be limited (system pressure) is led to an outlet opening (12) which, at pressures below the response setting,
b) is closed by a valve element (14) which
c) is forced onto the outlet opening (12) by the force of a valve spring (15), the outlet opening (12) serving as a valve seat and the valve spring (15)
d) being supported against a spring seat (16) which can be adjusted continuously,
e) the position of this spring seat (16) being determinable by means of a displacement transducer (20) which emits an electrical displacement signal ($U_{actual}$) representative of the seat position;
f) a comparator (25) compares the electrical displacement signal ($U_{actual}$) with a selectable, set-point value ($U_{set}$) and emits a corrective signal ($U_{correct}$) which,
g) after amplification, influences the position of the spring seat (16) in the sense of a closed control loop;
characterized by the following measures:
h) an electrically controllable valve arrangement (27), to which the system pressure is supplied, serves to amplify the corrective signal, converting it to a hydraulic force for the purpose of adjusting the spring seat (16);
i) the outlet opening (12) is located within a stepped piston (7), the hydraulic pressure to be monitored being directed onto the smaller piston surface (7b), while the larger piston surface (7a) contains the outlet opening (12) and, outside this opening (12), is at a low pressure, as is also the difference-surface (7c);
j) as the pressure rises, the stepped piston (7) can be slidably displaced, towards a stop (13).

2. Pressure-limiting valve according to claim 1, characterized in that the smaller piston surface (7b) is somewhat larger than the cross-section ($A_1$) of the outlet opening (12).
3. Pressure-limiting valve according to claim 1, characterized in that the smaller piston surface ($A_2$) is approximately the same size as the cross-sectional area ($A_1$) of the outlet opening (12), or is somewhat smaller than this area ($A_1$), and an additional spring (10) acts on the stepped piston (7) to counter the displacing action of the valve spring (15).
4. Pressure-limiting valve according to one of claims 1 to 3,
characterized in that the electrically controllable valve arrangement is formed by a three-way valve (27), to which the pressure to be monitored is supplied.

5. Pressure-limiting valve with electrical adjustment of the response setting, and with the following features:

a) in the valve housing (3), the pressure which is to be limited (system pressure) is led to an outlet opening (12) which, at pressures below the response setting,
b) is closed by a valve element (14) which
c) is forced onto the outlet opening (12) by the force of a valve spring (15), the outlet opening (12) serving as a valve seat and the valve spring (15)
d) being supported against a spring seat (16) which can be adjusted continously,
e) the position of this spring seat (16) being determinable by means of a displacement transducer (20) which emits an electrical displacement signal ($U_{actual}$) representative of the seat position;
f) a comparator (25) compares the electrical displacement signal ($U_{actual}$) with a selectable, set-point value ($U_{set}$) and emits a corrective signal ($U_{correct}$) which,
g) after amplification, influences the position of the spring seat (16) in the sense of a closed control loop; characterized by the following measures:
h) an electrically controllable valve arrangement (27), to which the system pressure is supplied, serves to amplify the corrective signal, converting it to a hydraulic force for the purpose of adjusting the spring seat (16);
k) the spring seat is installed, with its hydraulic adjustment means and the displacement transducer, in a component of the device, which component is capable of being slidably displaced, by hydraulic pressure, relative both to the valve housing and to the outlet opening, and is also capable of being moved towards a stop.

## Revendications

1. Soupape de limitation de pression, dont la valeur de réponse est réglable électriquement et qui présente les aménagements suivants:

a) la pression devant être limitée (pression du système) est transmise dans le boîtier de soupape (3) à une ouverture de sortie (12) qui, au-dessous de la valeur de réponse,
b) est fermée par un élément de soupape (14), qui
c) est repoussé par la force d'un ressort de soupape (15) contre l'ouverture de sortie (12) formant siège de soupape, auquel cas le ressort de soupape (15)
d) prend appui sur un siège (16) du ressort, réglable de façon continue,
e) dont la position peut être déterminée par un capteur de déplacement (20) qui délivre alors un signal électrique de déplacement ($U_{réel}$),
f) un comparateur (25) qui compare le signal de déplacement électrique ($U_{réel}$) à une valeur de consigne ($U_{consigne}$) pouvant être sélectionnée et délivre un signal de réglage ($U_{réglage}$) qui

g) agit après amplification, sur la position du siège (16) du ressort, à la manière d'un circuit de réglage, caractérisée par les caractéristiques suivantes:

h) un dispositif à soupage (27), qui est alimenté par la pression du système et peut être commandé électriquement, sert à amplifier le signal de réglage et à le convertir en une force hydraulique permettant de régler le siège (16) du ressort,

i) l'ouverture de sortie (12) est logée dans un piston étage (7), dont la plus petite surface ($A_2$) est chargée par la pression hydraulique à surveiller, tandis que la plus grande surface du piston entoure l'ouverture de sortie (12), et, en dehors de cette ouverture, est soumise à une faible pression, comme également la surface différentielle;

j) le piston étagé (7) peut être amené contre une butée (13) lorsque la pression augmente.

2. Soupape de limitation de pression selon la revendication 1, caractérisée en ce que la plus petite surface ($A_2$) du piston est légèrement supérieure à la section transversale de l'ouverture de sortie (12).

3. Soupape de limitation de pression selon la revendication 1, caractérisée en ce que la plus petite surface ($A_2$) du piston est approximativement égale ou légèrement supérieure à la surface ($A_1$) en section transversale de l'ouverture de sortie (12) et qu'un ressort supplémentaire (10) repousse le piston étagé (7) à l'encontre de l'action de déplacement du ressort de soupape (15).

4. Soupape de limitation de pression selon l'une des revendications 1 à 3, caractérisée en ce que le dispositif à soupape pouvant être commandé électriquement est formé par une soupape à trois voies (27), qui est alimentée par la pression devant être contrôlée.

5. Soupape de limitation de pression, dont la valeur de réponse peut être réglée électriquement et qui présente les aménagements suivants:

a) la pression devant être limitée (pression du système) est transmise dans le boîtier de soupape (3) à une ouverture de sortie (12) qui, au-dessous de la valeur de réponse,

b) est fermée par un élement de soupape (14), qui

c) est repoussé par la force d'un ressort de soupape (15) contre l'ouverture de sortie (12) formant siège de soupape, auquel cas le ressort de soupape (15)

d) prend appui sur un siège (16) du ressort, réglable de façon continue,

e) dont la position peut être déterminée par un capteur de déplacement (20) qui délivre alors un signal électrique de déplacement ($U_{réel}$),

f) un comparateur (25) qui compare le signal de déplacement électrique ($U_{réel}$) à une valeur de consigne ($U_{consigne}$) pouvant être sélectionnée et délivre un signal de réglage ($U_{réglage}$) qui

g) agit après amplification, sur la position du siège (16) du ressort, à la manière d'un circuit de réglage, caractérisée par les caractéristiques suivantes:

h) un dispositif de soupape (27), qui est alimenté par la pression du système et peut être commandé électriquement, sert à amplifier le signal de réglage et à le convertir en une force hydraulique permettant de régler le siège (16) du ressort,

k) le siège du ressort est disposé, ainsi que son dispositif de réglage hydraulique et le capteur de déplacement, dans une partie de l'appareil qui peut être déplacée par voie hydraulique par rapport au boîtier de soupape et à l'ouverture de sortie et peut être amenéecontre une butée.

Fig.1

Fig.2